# EUROPÄISCHE PATENTANMELDUNG

(11) **EP 1 175 108 A2**
(43) Veröffentlichungstag der Anmeldung: **23.01.2002**
(21) Anmeldenummer: 01115033.1
(22) Anmeldetag: 21.06.2001
(51) Int. Cl.: H04N 17/04

(54) **Verfahren zur Überprüfung von Bildwiedergabegeräten und Computerprogramm dazu sowie Verfahren zum Betrieb von medizinischen Geräten**

(30) Priorität: 21.06.2000 DE 10029526
(71) Anmelder: Sirona Dental Systems GmbH, 64625 Bensheim (DE)
(72) Erfinder: Schulze-Ganzlin, Ullrich, 64653 Lorsch (DE)
(74) Vertreter: Sommer, Peter

(57) **Zusammenfassung**

Die Erfindung betrifft ein Verfahren zur Überprüfung von Bildwiedergabeeinrichtungen. Dazu ist die Anordnung eines Testfeldes (1,2) als Teilbereich des dargestellten Bildes vorgesehen, die Zuordnung eines Bildparameters (K1a, K1i) zu dem Testfeld (1,2), die Veränderung eines Teilbereiches (5,6) des Testfeldes (1,2) bezüglich des Bildparameters (K1i), die Erfassung einer Eingabe durch den Benutzer bei Erkennen eines Unterschiedes des Bildparameters zwischen dem Teilbereich (5,6) und dem restlichen Testfeld (1,2), das Speichern des Bildparameters (K1i) des Teilbereichs (5,6) und das Vergleichen des Bildparameters (K1i) oder einer Transformation davon mit einem vorgegebenen Richtwert für den Bildparameter.
Schließlich kann die Beleuchtungsstärke gemessen, gespeichert und ausgewertet werden.

## Beschreibung

### Technisches Gebiet

Die Erfindung betrifft ein Verfahren zur Überprüfung von Bildwiedergabegeräten insbesondere in der medizinischen Diagnostik und ein Computerprogramm hierfür sowie ein Verfahren zum Betrieb von medizinischen Geräten.

In der medizinischen Technik, in der Bilder dargestellt und zur Diagnostik herangezogen werden, spielt die Qualität der bildwiedergebenden Geräte und deren Umgebungsbedingungen eine wichtige Rolle.

Das Bildwiedergabegerät ist Bestandteil einer Einrichtung zur Durchführung von Computertomografien, Ultraschall- oder Röntgenaufnahmen wie beispielsweise Mammografien oder dentale Panoramaaufnahmen, die ein in einem Speicher abgelegtes digitales Bild aufweisen. Dieses digitale Bild muß der Betrachtung durch den Anwender zugänglich gemacht werden, wozu es auf einem Bildwiedergabegerät dargestellt wird. Die Qualität der Darstellung des digitalen Bildes auf dem Bildwiedergabegerät hängt dabei maßgeblich von der Umgebungsbeleuchtung ab, aber auch von den spezifischen Einstellungen des Bildwiedergabegerätes selbst. Darüber hinaus beeinflusst auch die Erzeugung des Bildsignals aus den als Pixelwerte abgespeicherten digitalen Bilddaten mittels einer Grafikkarte und der Transformationskennlinie für die Zuordnung von Pixelwerten in Farbwerte die Qualität der Darstellung.

### Stand der Technik

In der Praxis werden Lichtdichtemessverfahren angewandt, bei denen mit einem Sensor die Lichtedichte des ausgeschalteten Bildwiedergabegerätes und die Lichtdichte eines hellsten Punktes des Bildwiedergabegerätes gemessen wird und anhand der Messwerte eine Einstellung des Bildwiedergabegerätes im Bezug auf Helligkeit und Kontrast erfolgt. Diese Einstellung darf nicht wieder verändert werden und die Umgebungsbedingungen, die während der Messung vorgelegen haben, müssen im Grunde während des gesamten Betriebs des Bildwiedergabegerätes zu diagnostischen Zwecken aufrecht erhalten werden. In der Regel werden entsprechende Verdunklungen des Raumes erforderlich, in dem das Bildwiedergabegerät aufgestellt ist.

### Darstellung der Erfindung

Mit dem erfindungsgemäßen Verfahren ist eine Überprüfung von Bildwiedergabegeräten möglich, durch die Anordnung eines Testfeldes als Teilbereich des dargestellten Bildes, die Zuordnung eines Bildparameters wie Kontrast, Auflösung, Rauschen zu dem Testfeld, der Veränderung eines Teilbereichs des Testfeldes bezüglich des Bildparameters, der Erfassung einer Eingabe durch den Benutzer bei Erkennen eines Unterschiedes des Bildparameters zwischen dem Teilbereich und dem restlichen Testfeld, dem Speichern des Bildparameters des Teilbereichs und schließlich dem Vergleichen des Bildparameters oder einer Transformation davon mit einem vorgegebenen Richtwert für den Bildparameter.

Durch Vergleich des Bildparameters des Teilbereichs mit dem Bildparameter des restlichen Testfeldes, beispielsweise einem Umgebungsbereich, lässt sich eine Kenngröße ableiten, die eine Aussage darüber zulässt, ob die Qualität der Bildwiedergabe den diagnostischen Anforderungen entspricht. Damit lassen sich auch veränderte Umgebungsbedingungen und sogar geänderte Einstellungen am Bildwiedergabegerät feststellen und auf die Eignung des Wiedergabegerätes zur medizinischen Diagnose hin überprüfen. Die dynamische Veränderung der Teilbereiche der Testfeld und der Zeitpunkt der Wahrnehmung von Veränderungen ist ein Maßstab für die Wiedergabequalität des Systems einschließlich der aktuellen Beleuchtungssituation und physiologischen Konstitution, insbesondere der Adaption des Auges des Bewerters.

Es versteht sich, dass das Verfahren auch umgekehrt ablaufen kann, wenn nämlich ausgehend von einer Differenz eine Eingabe dann erfolgt; wenn gerade kein Unterschied mehr erkennbar ist.

Vorteilhafterweise ist das Testfeld Bestandteil eines standardisierten Testbildes, insbesondere eines SMPTE-Testbildes (SMPTE = Subcommittee of the Society of Motion Picture and Television Engineers).

Die Verwendung eines standardisierten Testbildes lässt den Benutzer weitere Eigenschaften des Bildwiedergabegerätes erkennen, zu dem wird dem Benutzer deutlich gemacht, dass es sich hier um die Bestimmung von Eigenschaften des Bildwiedergabegerätes handelt, die sich auf die Qualität der Bildwiedergabe auswirken.

Wird ein SMPTE -Testbild verwendet, bietet es sich an, dass die Niedrigkontrastelemente 95 % und 5 % des Testbildes als Testfelder herangezogen werden und dynamisch verändert werden, da in diesen Feldern bereits veränderte Bereiche vorhanden sind.

An dieser Stelle sei jedoch erwähnt, dass die Anordnung der Testfelder auch in einem für die Diagnose bestimmten Bild erfolgen kann, wobei sogar eine Überlagerung der Testfelder über die eigentlichen Bilddaten möglich ist, um genau für diesen interessierenden Bereich die entsprechende Qualität des Bildwiedergabegerätes feststellen zu können.

Gemäß einer vorteilhaften Weiterbildung werden mindestens zwei Testfelder abgefragt. Die Testfelder sind vorteilhafterweise zueinander beabstandet und können nacheinander abgefragt werden. Dies bietet sich insbesondere dann an, wenn ein Testfeld hell und ein Testfeld dunkel ist, um eine Sättigung des Auges durch das wechselnde Fokussieren auf einen dunklen bzw. hellen Bereich zu verhindern.

Vorteilhafterweise liegt das Testfeld im Ausgangszustand im wiedergabespezifischen Problembereich des Bildparameters, so dass bereits eine Messung eine Aussage über die Qualität der Bildwiedergabe ermöglicht. Bei der Verwendung von zwei Testfeldern können diese im Ausgangszustand im jeweilig entgegengesetzten Endbereich des Bildparameters liegen. Es versteht sich von selbst, dass in den Bereichen des Bildparameters, in denen normalerweise keine Probleme zu erwarten sind, die Durchführung von Messungen in der Regel nicht erforderlich ist.

Um Fehleingaben durch den Benutzer bei Erkennen eines Unterschiedes des Bildparameters zu vermeiden, erfolgt die Veränderung des Bildparameters des Teilbereichs zeitverzögert. Erfolgt eine Eingabe während dieser Zeitverzögerung, wird dies als Fehler erkannt und das Verfahren muß erneut durchgeführt werden.

Um der Gefahr von beliebigen Eingaben zur bestimmungswidrigen Abkürzung des Verfahrens zu vermeiden, erfolgt die Zeitverzögerung zufallsorientiert, so dass der Benutzer nicht weiß, wann die Veränderung des Teilbereichs des Testfeldes bezüglich des Bildparameters tatsächlich beginnt. Erfolgt die Bestätigung vor Beginn der Veränderung, wird dies als Fehler erkannt und das Verfahren muß erneut durchgeführt werden.

Vorteilhafterweise wird während der Durchführung des Verfahrens die Beleuchtungsstärke am Bildwiedergabegerät erfasst. Dies hat den Vorteil, dass die so erfasste Beleuchtungsstärke mit der Beleuchtungsstärke während der medizinischen Diagnose des auf dem Bildwiedergabegerät dargestellten Bildes verglichen und bei zu großen Abweichungen der Beleuchtungsstärke auf die Gefahr der Fehldiagnose hingewiesen werden kann. Weiterhin können bestimmte Teilfunktionen des Systems gesperrt werden, beispielsweise kann unter diesen Bedingungen die Anzeige des Bildes unterbleiben. Mit der zusätzlichen Erfassung der Beleuchtungsstärke wird ein hohes Maß an Betriebssicherheit erreicht.

Vorteilhafterweise weist der Teilbereich und der Umgebungsbereich über ihre jeweilige Fläche homogene Bildparameter auf, so dass ein flächiger Eindruck entsteht und ein Vergleich der Bildwerte besser möglich ist.

Vorteilhafterweise wird als Bildparameter der Kontrast und/oder die Auflösung und/oder das Rauschen verwendet, wobei vorzugsweise ein Schwarz-weiß-Bild verwendet wird. Selbstverständlich kann beim Einsatz von Farbbildern auch der Kontrast anderer Farben verwendet werden.

Das Verfahren kann dazu verwendet werden, dass in dem Bereich, in denen bestimmte Kontrastunterschiede nicht erkannt werden können, keine oder entsprechend weniger Kontrastwerte zur Darstellung des digitalen Bildes herangezogen werden. Dadurch ist es möglich, die Auswertungsmöglichkeit von digitalen Bildern auch bei verringerter Qualität des Bildwiedergabegerätes zu verbessern, wobei jedoch darauf zu achten ist, dass eine Mindestqualität vorhanden ist.

Gemäß einem weiteren Verfahren zum Betrieb von medizinischen Geräten und zur Beeinflussung von deren Funktionsabläufen, bei dem ein Parameter ermittelt wird und die Funktionsabläufe in Abhängigkeit des Parameters gesteuert werden, wird der Parameter bestimmt aus der Ermittlung des Verhaltens des Wiedergabegeräts bezüglich eines Bildparameters unter Berücksichtigung der vorgegebenen Randbedingungen.

Dabei kann die Beleuchtungsstärke zum Zeitpunkt der Ermittlung des Verhaltens des Wiedergabegeräts bezüglich eines Bildparameters mit der Beleuchtungsstärke zum Zeitpunkt der eigentlichen Nutzung des medizinischen Geräts verglichen werden und bei über einen vorgegebenen Toleranzbereich hinausgehenden Abweichungen können die Funktionsabläufe in Abhängigkeit des Parameters gesteuert werden.

Weiterer Gegenstand der Erfindung ist ein Verfahren zur Wiedergabe von Bilddaten auf Bildwiedergabegeräten in der medizinischen Diagnostik, bei dem die Beleuchtungsstärke zum Zeitpunkt der Überprüfung mit der Beleuchtungsstärke zum Zeitpunkt der eigentlichen Nutzung verglichen wird, wobei nur bei innerhalb eines vorgegebenen Toleranzbereichs liegenden Abweichungen eine Wiedergabe der Bilddaten auf dem Bildwiedergabegerät erfolgt.

Schließlich ist ein Computerprogramm zur Durchführung des vorstehend beschriebenen Verfahrens Gegenstand der Erfindung.

### Kurzbeschreibung der Zeichnung

Ein Ausführungsbeispiel der Erfindung ist in der Zeichnung dargestellt. Es zeigt die
- Fig. 1: einen Programmablaufplan zur Ausführung des erfindungsgemäßen Verfahrens mit den Fig. 1a und 1b, die
- Fig. 2: ein Testbild mit zwei Testfeldern, die in den Fig. 2a und 2b im Detail dargestellt sind,
- Fig. 3: eine gemessene Kennlinie eines Bildwiedergabegerätes,
- Fig. 4: eine Anordnung zur Durchführung des erfindungsgemäßen Verfahrens mit mehreren Sensoren zur Erfassung der Helligkeit und die
- Fig. 5: einen Ablaufplan für das übergeordnete Verfahren, in das das in Fig. 1 beschriebene Verfahren eingebettet ist.

### Ausführungsbeispiel der Erfindung

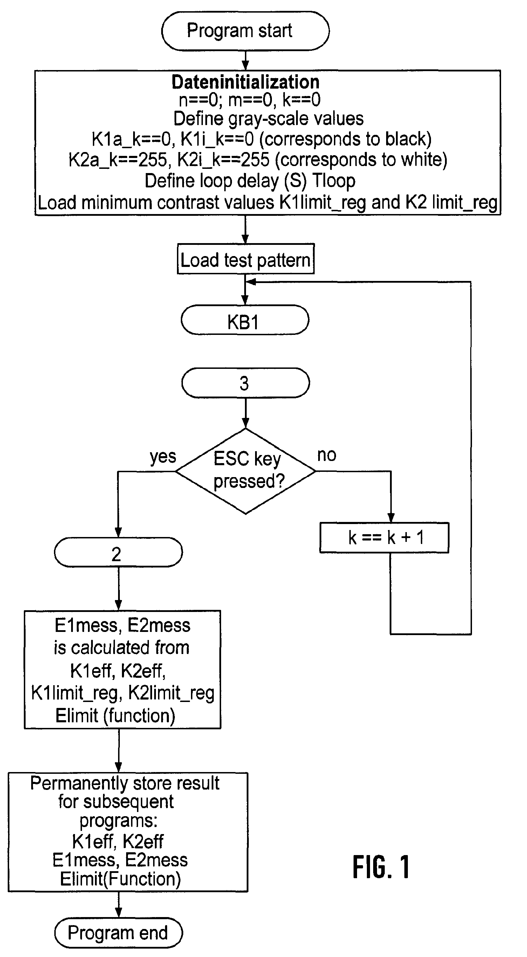

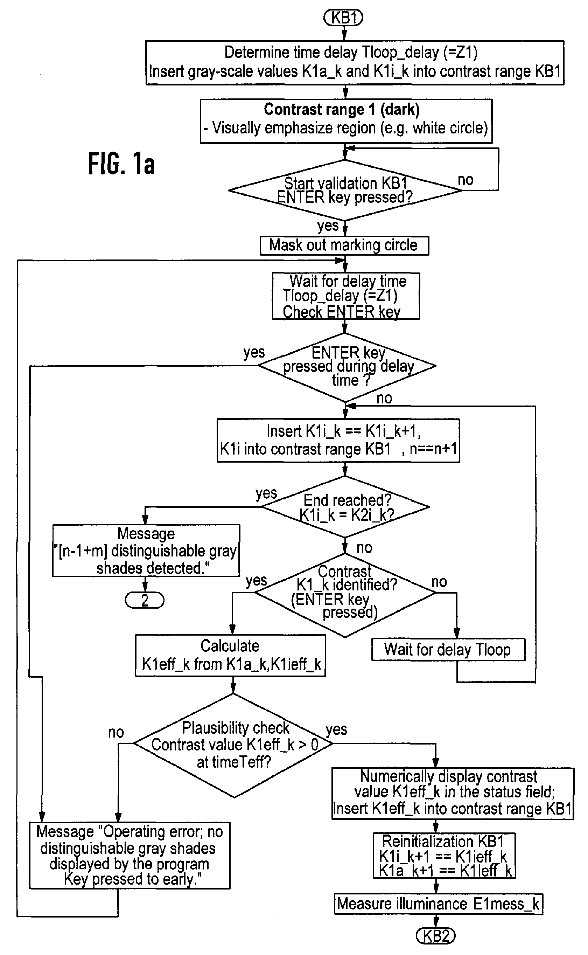

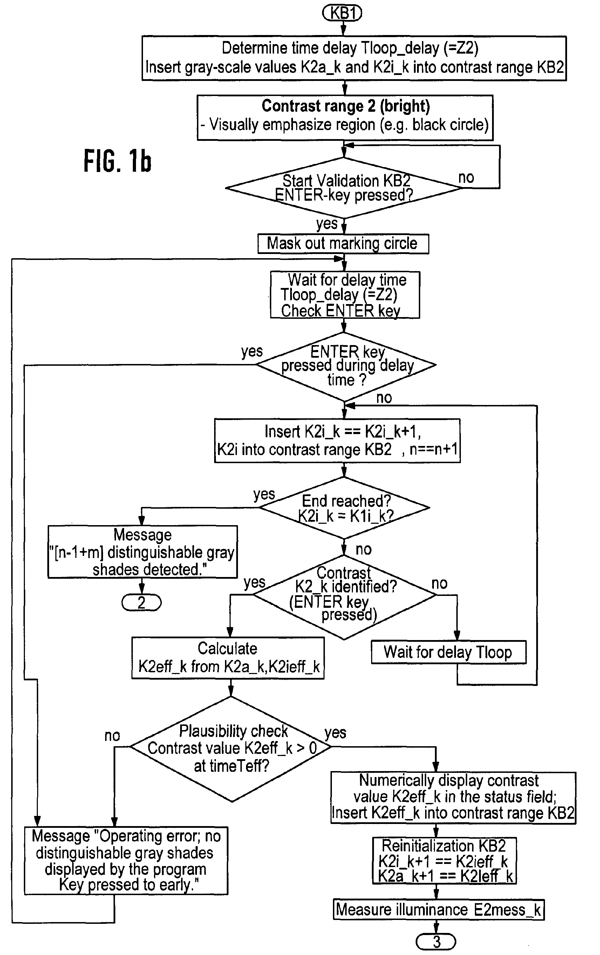

In den Fig. 1, 1a und 1b ist ein Programmablaufplan zur Ausführung des erfindungsgemäßen Verfahrens auf einem nicht dargestellten Rechner wiedergegeben. Ausgangspunkt des Verfahrens ist ein in einem digitalen Speicher abgelegtes Testbild, bei dessen Darstellung die digitalen Bildpixel in analoge Videosignale umgewandelt werden bzw. in entsprechende digitale Bildwiedergabesignale bei digitalen Anzeigegeräten wie Flachbildschirmen. Anhand dieser Videosignale oder digitalen Bildwiedergabesignalen erfolgt eine Darstellung auf dem Bildwiedergabegerät und kann dort durch den Anwender betrachtet werden.

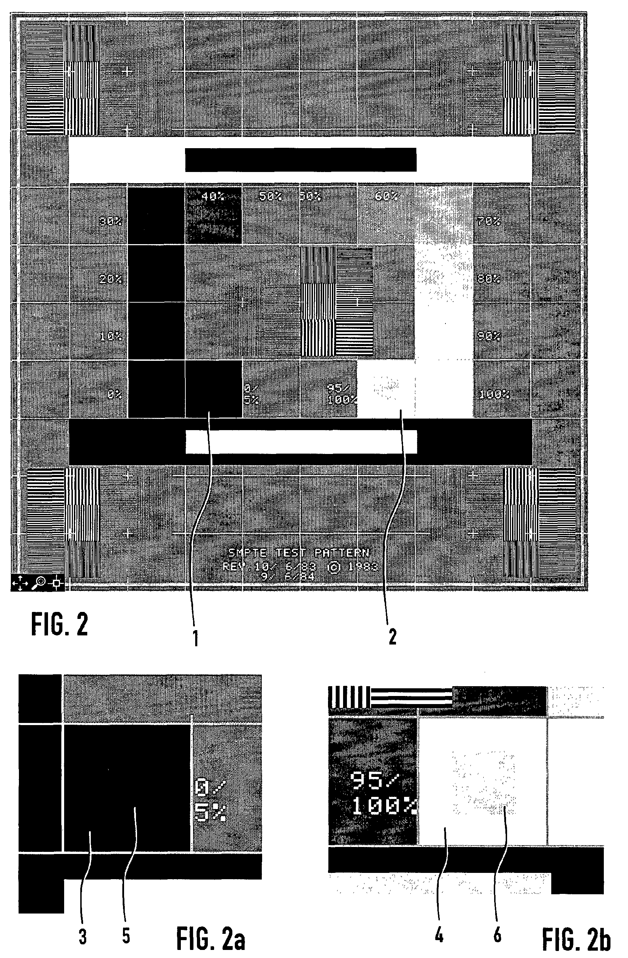

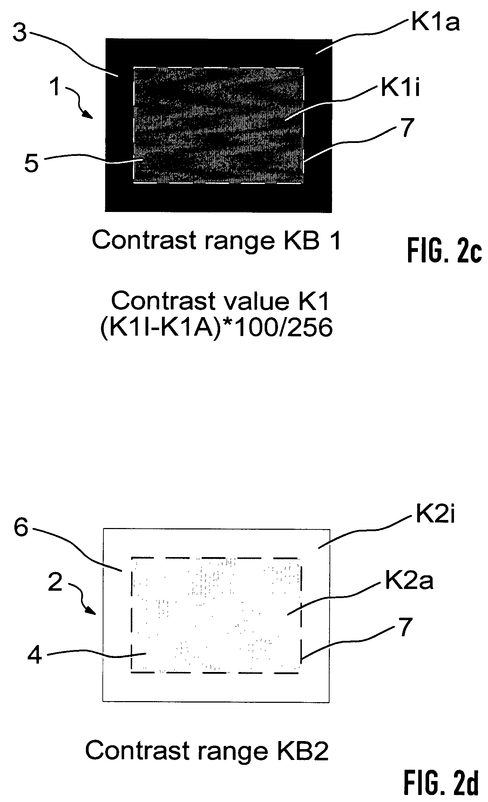

Das Testbild, dargestellte in Fig. 2, weist verschiedene Kontrastbereiche auf, von denen zwei als im Kontrastwert veränderliche Testfelder 1,2 ausgebildet sind. Jedes der Testfelder 1, 2 besteht aus einem Umgebungsbereich 3, 4 mit einem Grauwert K1a bzw. K2a und einem vollständig in den Umgebungsbereich 3, 4 eingebetteten Teilbereich 5,6 mit einem Grauwert K1i bzw. K2i.

Bei dem in Fig. 2 dargestellte Testbild, das aus Grauwerten mit einem Kontrastwert zwischen 0 und 255 gebildet ist, werden zu Beginn des Verfahrens die Grauwerte für den Umgebungsbereich 3 und den Teilbereich 5 sowie den Umgebungsbereich 4 und den Teilbereich 6 festgelegt. Im Testfeld 1 werden zu Beginn die Grauwerte auf 0 festgelegt, was einer vollständigen Schwärzung entspricht, im Testfeld 2 werden die Grauwerte auf 255 festgelegt, was einer weißen Fläche entspricht. Die Darstellung der Testfelder 1,2 ist zu Beginn demnach völlig einheitlich.

Beim Laden des Testbildes in den für die Bildausgabe vorgesehenen Speicherbereich des Rechners werden die bei der Dateninitialisierung festgelegten Grauwerte für die Testfelder 1 und 2 ebenfalls eingelesen und auf dem Bildwiedergabegeräte dargestellt. Der Teilbereich 5,6 des Testfeldes 1,2 in dem die Änderungen zur erwarten sind, wird durch eine Markierung 7 in Form einer gestrichelten Linie hervorgehoben. Durch Betätigung der Eingabetaste wird die Veränderung des Grauwertes des Teilbereichs 5 gestartet. Dabei wird zunächst die Markierung ausgeblendet, so daß das gesamte Testfeld 1 einheitlich eingefärbt ist. Nach einer vom Rechner vorgegebenen zufälligen Verzögerungszeit Z1 erfolgt eine Veränderung des Grauwertes K1i des Teilbereichs 5 um einen Grauwert, wobei in diesem Fall der Grauwertes K1i erhöht wird. Durch Betätigen der Eingabetaste wird die Erkennung der Veränderung des Kontrastwertes mitgeteilt. Wird die Eingabetaste nicht gedrückt, so wird ständig der Grauwert erhöht, bis eine wahrnehmbare Abstufung des Teilbereichs 5 gegenüber dem Umgebungsbereich 3 vorliegt. Der Kontrastwert K1 wird nach dem Drücken der Eingabetaste berechnet, gespeichert und in einem Statusfeld eingeblendet. Der Kontrastwert K1 des Testfeldes 1 berechnet sich zu K1 = ((K1ieff - K1a) *100/256). Für eine wiederholte Durchführung dieses Verfahrensablaufs wird eine Neuinitialisierung des Grauwertes des Testfeldes 1 vorgenommen dergestalt, dass der erkannte Grauwert K1i des Teilbereichs 5 auch dem Umgebungsbereich 3 mit dem Kontrastwert K1a zugeordnet wird, ohne dass die Anzeige jedoch in diesem Augenblick bereits an den neuen Wert angepasst wird.

Wird die Eingabetaste vor Ablauf der Verzögerungszeit Z1 gedrückt, erscheint eine Fehlermeldung und der Programmabschnitt bzw. dieser Verfahrensschritt muß insgesamt nochmals wiederholt werden.

Nachdem der erste Kontrastwert im dunklen Bereich festgestellt wurde, wird nun das Testfeld 2 mit dem entgegengesetzten Grauwert, hier beginnend bei 255 verändert. Dazu werden die aus der Dateninitialisierung stammenden Grauwerte K2a und K2i in das Testfeld 2 geladen und der Teilbereich 6, dessen Grauwert K2i verändert wird, wird durch eine Markierung 7 visuell hervorgehoben. Um die Veränderung des Grauwertes im Bereich 6 auszulösen, muß nun die Eingabetaste gedrückt werden, woraufhin die Markierung 7 ausgeblendet wird und eine Verzögerungszeit Z2 beginnt. Nach Ablauf der Verzögerungszeit wird der Grauwert verringert und es wird ein Zeitintervall S gewartet.

Um festzustellen, ob der veränderte Kontrast zwischen dem Teilbereich 6 und dem Umgebungsbereich 4 erkannt wird, muß dies durch Drücken der Eingabetaste bestätigt werden. Ist dies nicht der Fall, wird der Grauwert solange verringert, bis die Eingabetaste gedrückt wird. Aus den dann vorhandenen Daten wird der Kontrastwert K2 berechnet, gespeichert und dem Statusfeld eingeblendet. Der Kontrastwert K2 berechnet sich als Prozentzahl nach der Formel K2 = 100 - ABS(((K1a - K1i)*100/256).

Anschließend wird eine Neuinitialisierung des Grauwertes K2a vorgenommen, in dem der festgestellte, erkannte Grauwert K2i des Teilbereichs 6 auch dem Umgebungsbereich 4 mit dem Grauwert K2a zugeordnet wird.

Wird nun die Abbruchtaste (ESC) gedrückt oder erreichen die Grauwerte des Teilbereiches 5 bzw. 6 das andere Ende des Bereiches, also K1i = 255 oder K2i = 0, so ist der Programmlauf zu Ende und die gespeicherten Ergebnisse für die Kontrastwerte K1 und K2, die für jeden einzelnen Ablauf festgestellt wurden, können auf einem angeschlossenen Drucker in Form einer Kennlinie für den Monitor ausgegeben werden.

In Fig. 2 ist ein SMPTE-Testbild wiedergegeben, das aus vielen verschiedenen Bereichen besteht. Unter anderem sind Felder mit unterschiedlichem Kontrast von 0, 10, 20, .... bis 100 % vorgesehen, darüber hinaus sind in der Mitte und in den Ecken Strichgitter unterschiedlicher Liniendichte vorgesehen. Von Bedeutung sind hier zwei Testfelder 1,2 im Bereich der Felder unterschiedlichen Kontrastes. Die Testfelder 1,2 sind in den Fig. 2a und 2b im Detail und in den Fig. 2c und 2d schematisch dargestellt. Das Testfeld 1 aus Fig. 2a besteht aus einem Umgebungsbereich 3, in den ein Teilbereich 5 vollständig eingebetet ist, wobei der Teilbereich 5 einen höheren Kontrast aufweist als der Umgebungsbereich 3, der Grauwert des Teilbereichs 5 ist höher als der Grauwert des Umgebungsbereichs 3.

In Fig. 2b ist das Testfeld 2 im Detail dargestellt und es ist zu erkennen, dass in den Umgebungsbereich 4 ein Teilbereich 6 eingebettet ist, dessen Kontrastwerte niedriger sind als die des Umgebungsbereichs 4.

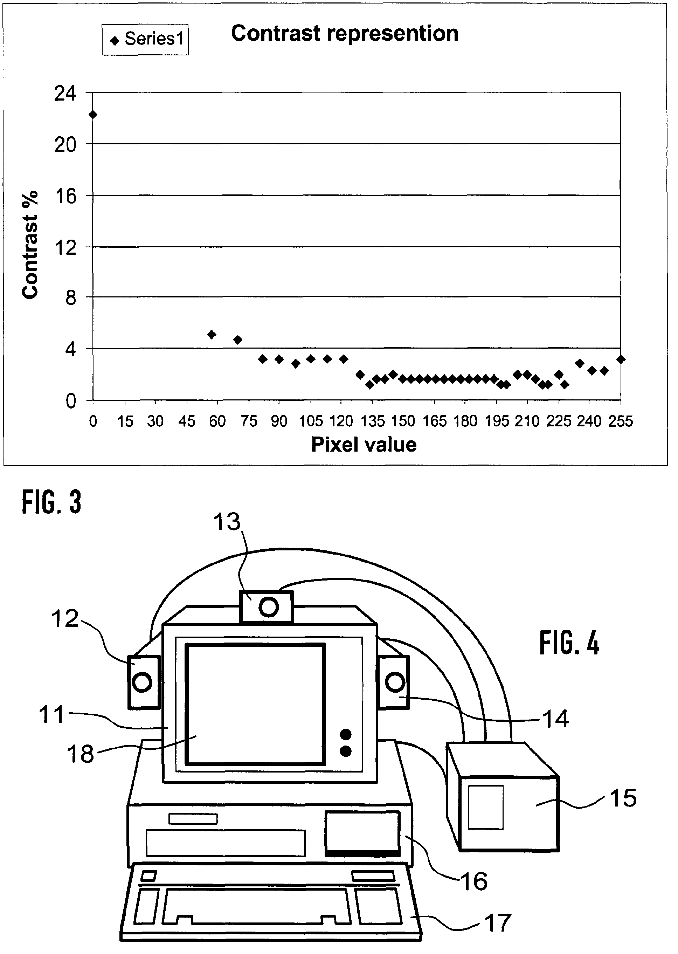

In der Fig. 3 ist eine Kennlinie für einen LCD-Monitor gezeigt, welche dadurch entstanden ist, dass das in Fig. 1 gezeigte Programm ausgeführt wurde. Die eingetragenen Messwerte wurden so gebildet, dass die Anzahl der erforderlichen Gaustufenwerte bis zum Feststellen der nächsten Kontraststufe festgestellt wurde, dies ist also die Differenz zwischen dem Wert K1a und dem Wert K1i, wobei die festgestellte Zahl der Graustufen durch die insgesamt verfügbare Graustufenzahl von 256 geteilt wurde und mit 100 multipliziert wurde, um einen Prozentwert zu erhalten. Der erste Werte wird dadurch gebildet, dass bei einem Umgebungsbereich 3 mit einem Kontrastwert K1a = 0, also einem schwarzen Bereich, der Kontrastwert K1i des Teilbereichs 5 ständig erhöht wurde, bis bei einem Wert K1i = 57 eine wahrnehmbare Veränderung des Kontrastes gegenüber dem Umgebungsbereich festgestellt wurde. Es ist zu erkennen, dass die in diesem Bereich angeordneten Grauwerte des für die Diagnose verwendeten Bildes zur Wiedergabe auf dem Bildwiedergabegerät völlig ungeeignet sind, da das Bildwiedergabegerät in diesem Bereich keine unterscheidbaren Bildinformationen liefert.

Erst der nächste Wert, der nach weiteren 13 Graustufen eine wahrnehmbare Kontraständerung des Teilbereichs 5 gegenüber dem Umgebungsbereich 3 bewirkt, weist in einen Bereich ohne weitere Ausreißer. Der Kontrastwert von etwa 5 % für den zweiten Wert ist gleichwohl für viele Anwendungsfälle der Röntgendiagnostik noch zu hoch, so dass erst in dem Bereich, in dem weiter verringerte Kontrastwerte von kleiner 2 % erreicht werden, eine hinreichende Auflösung der Grauwerte gegeben ist.

Betrachtet man sich die Kennlinie aus Fig. 3 so sind anstatt von 256 möglichen Grauwerten nur 39 Grauwerte erkannt, das Bildwiedergabegerät bietet also tatsächlich anstatt 256 Grauwerten nur 39 unterscheidbare Grauwerte. Da die digitalen Bilddaten auf 256 Grauwerte verteilt sind, muß eine Korrektur der Grauwerte der Bilddaten dergestalt erfolgen, dass die 256 Grauwerte auf 39 umgerechnet werden, um einen möglichst geringen Informationsverlust zu vermeiden. Bei dieser Korrektur kann der Bereich der darzustellenden Grauwerte dann vergrößert werden, wenn die digitalen Bilddaten nicht den vollen Bereich von 256 Grauwerten ausschöpfen, sondern beispielsweise nur 100 verschiedene Grauwert aufweisen. In diesem Fall wird die Auflösung von 256/39 auf 150/39 gesteigert. Vorteilhafterweise werden nur Grauwerte im Randbereich unberücksichtigt gelassen, um die Kennlinie der Bilddaten nicht zu verfälschen.

Es versteht sich von selbst, dass anstatt 256 Grauwerten in einer 8-Bit-Darstellung auch 1024 Grauwerte in einer 10-Bit-Darstellung bzw. eine beliebige andere Anzahl von Grauwerten verwendet werden kann.

In Fig. 4 ist ein Geräteaufbau zur Durchführung des Verfahrens dargestellt. Zu erkennen sind an einem Bildwiedergabegeräte 11 angeordnete Sensoren 12-14 zur Bestimmung der Beleuchtungsstärke der Umgebung während der Durchführung des Verfahrens und auch später während des Betriebs des Bildwiedergabegerätes 11. Die Sensoren 12-14 sind über ein Anschlussgerät 15 mit einem Rechner 16 verbunden, an den auch eine Tastatur 17 und ein Bildschirm 18 angeschlossen sind. Auf dem Bildschirm 18 wird im Betrieb das Bild angezeigt, das zur medizinischen Diagnose ansteht.

Selbst wenn an dem Bildschirm 18 die Helligkeit und/oder der Kontrast über Regler verstellt wird, lassen sich mit dem vorliegenden Verfahren bzw. Computerprogramm Diagnosefehler vermeiden.

Aus Fig. 1 ergibt sich weiterhin, dass in dem Programmbereich, in dem die Grauwerte des Teilbereichs 3,4 erhöht werden und vom Betrachter zu beurteilen sind, eine Berücksichtigung der Reaktionszeit vorgenommen, in dem bei der Eingabe eine mittlere Reaktionszeit angenommen wird und auf den Wert zurückgerechnet wird, der dem erkannten Wert K1eff entspricht. Erkennt der Benutzer also einen Kontrastunterschied, so vergeht eine Reaktionszeit bis zur Betätigung der Eingabetaste, mit welcher dem Programm mitgeteilt wird, dass die Kontraständerung erkannt wurde. Während dieser Zeit wird der Kontrast des Teilbereiches jedoch weiter erhöht, so dass der dann festgestellte Grauwert höher liegt als der tatsächlich bereits erkannte Wert. Anschließend wird der effektiv erkannte Wert in dem Testfeld angezeigt.

Alternativ zu dieser Vorgehensweise könnte auch dafür Sorge getragen werden, dass nach jeder Änderung des Grauwertes eine ausreichende Zeit bemessen wird, um der Reaktionszeit Rechung zu tragen. Dadurch wird aber die Ausführungszeit des Verfahrens deutlich verlängert. Nimmt man einen Grauwertebereich von 256 Grauwerten von denen jeder einzelne erkannt wird, würde eine Wartezeit von 1 Sekunde nach jeder Veränderung des Grauwertes einen Zeitbedarf von 256 Sekunden bedeuten, was mehr als vier Minuten sind. Insbesondere dann, wenn die Veränderung des Grauwertes nicht erkannt wird, verstreicht die volle Zeit, so dass mitunter der Betrachter mehrere Sekunden lang das Testfeld fokussieren muss, was zu Ermüdungen führen kann. Allerdings sind die Ergebnisse hier genauer.

Das erfindungsgemäße Verfahren kann beispielsweise regelmäßig nach Einschalten des Monitors durchgeführt werden oder aber zu jedem anderen, vorher festgelegten Zeitpunkt, beispielsweise nach dem Aufwärmen des Bildschirmes, um eine Information über die Qualität der Bildwiedergabe zu erhalten. Dabei kann insbesondere auch zusätzlich der Einfluss der Umgebungsbeleuchtung über einen Sensor festgestellt werden um dann bei der medizinischen Diagnose des auf dem Bildwiedergabegerät dargestellten Bildes einen Überprüfung zu ermöglichen.

Mit dem vorgeschlagenen Verfahren wird die Helligkeit selbst nicht direkt festgestellt. Es kann allerdings sein, dass die Graustufen dann nicht festgestellt werden können, wenn die Helligkeit des Bildwiedergabegerätes nicht ausreichend groß ist, was unter anderem auch von der Beleuchtungsstärke der Umgebung abhängt. Ohne aufwendige Messung der Lichtdichte des Bildwiedergabegerätes ist eine Feststellung möglich, dass ein ausreichender Kontrast zur medizinischen Diagnose von Bildern vorliegt, wie er beispielweise sogar anwendungsspezifisch für verschiedene Bereiche in unterschiedlicher Größe vorgeschrieben werden kann. Beispielsweise könnte für eine Mammografie der Kontrast nicht mehr ausreichen, eine zahnärztliche Diagnose könnte aber noch möglich sein.

Wird als Ergebnis des Verfahrens festgestellt, dass der zu erkennende Kontrast des Bildwiedergabegerätes nicht ausreicht, um eine medizinische Diagnostik zu ermöglichen, so kann gegebenenfalls die Einstellung des Bildwiedergabegerätes durch Drehen an dem Helligkeitsregler bzw. dem Kontrastregler die Eigenschaft des Bildwiedergabegerätes geändert werden und bei einer Neudurchführung des Verfahrens kann eine dann ausreichende Qualität festgestellt werden.

Werden bestimmt Leistungseigenschaften des Bildwiedergabegerätes nicht erreicht, können Funktionen der medizinischen Diagnose eingeschränkt, gesperrt oder erst nach Bestätigung durch den Anwender benutzt werden. Dabei kann insbesondere einen Darstellung von Bildern abgelehnt werden oder eine Befundeingabe in den Rechner gesperrt sein. Wird das Verfahren vor der Erstellung der die digitalen Bilddaten liefernden Aufnahme durchgeführt, so kann bei nicht Erreichen bestimmter Leistungseigenschaften die Erstellung der Aufnahme gesperrt werden. Damit wird vermieden, dass an einem fehlerhaften System gearbeitet wird, welches keine ausreichende medizinische Diagnose zulässt.

Der Grad der Einschränkung orientiert sich dabei an dem gerade noch erkennbaren Kontrast K1 und K2, welcher gemäß dem Diagramm aus Fig. 1 ermittelt wurde, der Umgebungsbeleuchtungstärke ET0 zum Zeitpunkt der Messung, der Technologie und Modalität der Bilderfassung, zum Beispiel Ultraschall, CT, Mammografie, Dental, der medizinischen Indikation, zum Beispiel Befundung, Kontrolle, im Dentalbereich Wurzelkanalbehandlung, Kariesdetektion, der Umgebungsbeleuchtungsstärke die ETN zum Zeitpunkt der Benutzung des Wiedergabesystems. Dank des Verfahrens können äquidistante Kontrastwerte über den gesamten Helligkeitsbereich ermittelt werden. Damit lassen sich Kennlinien zur Verbesserung der Darstellungsqualität durch Kompensation nicht idealer Darstellungseigenschaften des Wiedergabegerätes bestimmen.

Wenn also bestimmte Pixelwertabstände nicht erkannt werden, werden in diesen Bereichen keine oder entsprechend weniger Pixelwerte zur Grauwertdarstellung herangezogen. Das Verfahren hat also gegenüber einem Lichtdichtmessverfahren den Vorteil, dass die Bildwiedergabekette berücksichtigt wird, nämlich digitaler Wert des Testbildes bzw. Testmusters, Umsetzung in Videosignal über die Grafikkarte, den Grafikmodus, die Software, die Kabel, Darstellung auf dem Bildwiedergabegerät mit einer bestimmten Beleuchtungsstärke und einer Kennlinie unter Bedingungen der Umgebungsbeleuchtung und der Konstitution des Betrachters.

Das Verfahren kann an zwei wesentlichen Stellen zum Qualitätsmanagement beitragen, indem die ermittelten Verfahrensergebnisse zum Nachweis der angewendeten System- und Verfahrensqualität dokumentiert werden können.

Als Verfahrensergebnisse können die Basisdaten der Qualitätsuntersuchung dienen, nämlich das Datum der Qualitätsuntersuchung des Wiedergabegerätes, die Daten zur Identifikation des Wiedergabesystems, der Name der Person, die die Qualitäts-Untersuchung durchführte, die Ergebnisse der Kontrastermittlung - K1eff(k) und K2eff(k), wobei k>=1 ist, die Beleuchtungsstärke am Buildwiedergabegerät - Emess(k)), wobei k>=1 ist, die Anzahl der ermittelten Graustufen, der Name und die Version des angewendeten Programms oder die zulässige Beleuchtungsstärken in Abhängigkeit von Funktionen-Elimit(Funktion).

Die folgenden Daten sind als befundungsbezogene Daten anzusehen, nämlich das Datum der Befundung, die Daten zur Identifikation des Wiedergabesystems, der Name der Person, die die Befundung durchführte, die Ergebnisse der Kontrastermittlung - K1eff(k) und K2eff(k), wobei k>=1 ist, die Beleuchtungsstärke am Monitor - E-mess(k)), wobei k>=1 ist und der Name und die Version des angewendeten Programms.

Dokumentationsort kann ein Teil des lesbaren Befundungstextes und somit Teil des Befundes sein, aber auch im Datensatz des Befundungstextes oder des befundeten Bildes.

Als Bildparameter kommen in Betracht der Kontrast, die Ortsauflösung, das Rauschen sowie Kombinationen hiervon.

Im Falle des Kontrastes bedeutet dies, dass flächige, homogene Strukturen zur Untersuchung der Mindest-Kontrastdarstellung sowohl im Grau- als auch im Farbbereich zur Anwendung gelangen können. Das dynamische Element ist das Einblenden einer Fläche, deren Farb-bzw. Grauwert mit stetig steigendem Kontrast bezüglich der umgebenden Fläche eingeblendet wird.

Ortsauflösungen können mit nebeneinander angeordneten Linien ermittelt werden. Dabei unterscheiden sich die Linien hochkontrastig von einander, z.B. schwarz/weiss bzw. 0/255. Der Parameter zur Auflösung könnte die Anzahl der Linien-Paare pro Länge sein. Das dynamische Element ergibt sich dann durch die kontinuierliche Verringerung der Linien-Paare pro Länge.

Das Rauschen erfordert eine Anordnung ähnlich wie beim Kontrast. Konstant bleibt der mittlere Grau- oder Farb-wert, verändern wird sich die Verteilung der Werte.

Denkbar ist weiterhin eine Anordnung aus der Kombination der vorangegangen Ausführungen, z.B. konstanter Linien-Paar Darstellung, jedoch mit veränderbarem Kontrast.

Wie beschrieben kann in Abhängigkeit der aktuellen Einstellungen und der Beleuchtungsstärke eine individuelle Kennlinie des Bildwiedergabegeräts ermittelt werden. Ist die Kennlinie bekannt, kann eine Kompensation erfolgen, indem die Kennlinie transformiert wird, so dass sie im wesentlichen äquidistante Kontrastwerte angibt, die im Spezialfall gerade noch erkannt werden (Just noticeable differences - JND). Idealerweise sollte die Anzahl der in Graustufen oder Farbkontraststufen darzustellenden Pixelwerte kleiner oder gleich der JND-Anzahl sein.

Jede JND(n) kann einen Bereich n in der Wiedergabekennlinie belegen. Per Zuordnungstabelle werden die Pixelwerte diesen Bereichen zugeordnet. Falls mehr Pixelwerte als JND vorhanden sind, muß eine Zusammenlegung erfolgen. Idealerweise, um den Bildeindruck durch nichtlineare Abbildung möglichst nicht zu verfälschen, erfolgt eine gemittelte Zusammenlegung.

Das Verfahren wurde so beschrieben, dass solange Werte verändert werden, bis eine Veränderung sichtbar wird. Das Verfahren kann auch umgekehrt ablaufen, wenn nämlich ausgehend von einer Differenz kein Unterschied mehr erkennbar ist.

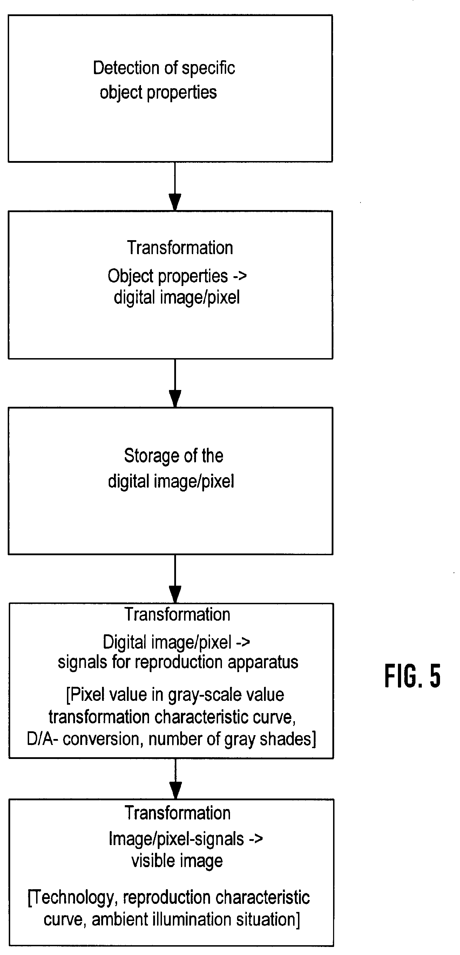

In Fig.5 ist ein Ablaufplan für das übergeordnete Verfahren dargestellt in dem das in Fig. 1 beschriebene Verfahren eingebettet ist. Zunächst wird ausgewählt, welcher Art das zu untersuchende Objekt ist und die geeignete Methode, beispielsweise Röntgen oder Ultraschall, wird gewählt. Dann werden die Objekteigenschaften mit einem geeigneten Sensor erfasst und in ein digitales Bild, welches aus Pixeln aufgebaut ist, transformiert. Die so entstandenen digitalen Bilddaten werden abgespeichert. Zur Vorbereitung der Anzeige der digitalen Bilddaten müssen diese in Signale für ein Wiedergabegerät transformiert werden. Anschließend erfolgt eine weitere Transformation der Signale in ein sichtbares Bild. Hierbei muss sichergestellt werden, dass die Qualitätsanforderungen der Darstellung des Bildes eingehalten werden, um eine hinreichend sichere medizinische Diagnose zu erlauben.

Folgende Abkürzungen werden im Programmablaufplan gemäß Fig. 1 verwendet:

**Tabelle 1**

| **Variable** | **Bezeichnung** | **Typ. Wertebereich** |
|---|---|---|
| | | |
| K1a | Grauwert in Kontrastbereich KB1 - aussen | 0-255 |
| K1i | Grauwert in Kontrastbereich KB1 - innen | 0-255 |
| K2a | Grauwert in Kontrastbereich KB2 - aussen | 0-255 |
| K2i | Grauwert in Kontrastbereich KB2 - innen | 0-255 |
| n | n-te Inkremental-Schleife in KB1 | |
| m | m-te Inkremental-Schleife in KB2 | |
| k | k-ter Durchlauf durch KB1 und KB2 | |
| K1_k | ermittelter Kontrastwert aus Bereich KB1 zum k-ten Durchlauf | 0,1 - 10% |
| K2_k | Ermittelter Kontrastwert aus Bereich KB2 zum k-ten Durchlauf | 0,1 - 10% |
| Emess_k | Mit Luxmeter gemessene Beleuchtungs-stärke am Monitor zum k-ten Durchlauf | 801x |
| Emess(k) | Vektor mit Emess_k | |
| Elimit (Funktion) | Vektor, berechnet aus K1_k, K2_k, E-mess_k, K1limit_reg und K2limit_reg, gibt an, welche Funktionen bei welcher max. Beleuchtungsstärke zugelassen sind | 2001x |
| Tenter | Zeitpunkt zu dem die ENTER-Taste ge-drückt wird | - |
| Teff | Effektiver Zeitpunkt zur Bestimmung Kontrastswert: Tenter minus Tuser_delay | - |
| K1eff_k | Berechneter Kontrast im Bereich KB1 zum Zeitpunkt Teff | |
| K1eff(k) | Vektor mit K1eff_k | |
| K2eff(k) | Vektor mit K2eff_k | |

**Tabelle 2**

| **Konstante** | **Bezeichnung** | **Typ. Wertebereich** |
|---|---|---|
| Tloop_delay | per Zufall vom Programm bestimmte Verzögerungszeit (Z1 bzw. Z2) | 0 - 5 s |
| Tloop | Verzögerung (S) für In/Dekrement-Schleife | 0,1 - 2 s |
| Tuser_delay | zu beachtende Reaktionszeit des Anwenders | 0,1 - 2 |
| K1limit_reg | durch Richtlinien vorgegebener Mindestkontrast Bereich KB1 | 1% |
| K2limit_reg | durch Richtlinien vorgegebener Mindestkontrast Bereich KB2 | 1% |

Die Variablen sind von aussen durch den Programmablauf bestimmt, die Konstanten sind nicht von aussen über den Programmmablauf veränderbare Werte, sondern sind durch Initialiserung, Algorithmen oder Programm-Implementierung vorgegeben.

Es ist weiterhin möglich, die Kontrastwerte zusammen mit den digitalen Bilddaten und/oder dem Befund abzuspeichern, um eine Qualitätssicherung zu gewähgrleisten. Damit lässt sich nachvollziehbar sicherstellen, dass die für die medizinische Diagnose erforderlichen Anforderungen an das Bildwiedergabegerät und den Bediener eingehalten wurden.

## Patentansprüche

1. Verfahren zur Überprüfung von Bildwiedergabeeinrichtungen, **gekennzeichnet durch** die Anordnung eines Testfeldes (1,2) als Teilbereich des dargestellten Bildes,
- Zuordnung eines Bildparameters (K1a, K1i) zu dem Testfeld (1,2);
- Veränderung eines Teilbereiches (5,6) des Testfeldes (1,2) bezüglich des Bildparameters (K1i);
- Erfassung einer Eingabe **durch** den Benutzer bei Erkennen eines Unterschiedes des Bildparameters zwischen dem Teilbereich (5,6) und dem restlichen Testfeld (1,2);
- Speichern des Bildparameters (K1i) des Teilbereichs (5,6);
- Vergleichen des Bildparameters (K1i) oder einer Transformation davon mit einem vorgegebenen Richtwert für den Bildparameter.

2. Verfahren nach Anspruch 1, **dadurch gekennzeichnet, daß** das Testfeld (1,2) Bestandteil eines standardisierten Testbildes, insbesondere eines SMPTE-Testbildes ist.

3. Verfahren nach Anspruch 2, **dadurch gekennzeichnet, dass** die Niedrigkontrastelemente 95 % und 5 % des Testbildes dynamisch verändert werden.

4. Verfahren nach einem der Ansprüche 1 bis 3, **dadurch gekennzeichnet, dass** mindestens zwei Testfelder (1,2) abgefragt werden.

5. Verfahren nach Anspruch 4, **dadurch gekennzeichnet, dass** das Testfeld (1,2) im Ausgangszustand im wiedergabespezifischen Problembereich des Bildparameters liegt.

6. Verfahren nach einem der Ansprüche 1 bis 6, **dadurch gekennzeichnet, dass** die Veränderung des Bildparameters des Teilbereichs (5,6) zeitverzögert nach Auslösung des Testverfahrens erfolgt.

7. Verfahren nach Anspruch 6, **dadurch gekennzeichnet, dass** die Zeitverzögerung (Z1, Z2) zufallsorientiert ist.

8. Verfahren nach einem der Ansprüche 1 bis 7, **dadurch gekennzeichnet, dass** während des Verfahrens die Beleuchtungsstärke am Bildwiedergabegerät erfasst wird.

9. Verfahren nach einem der Ansprüche 1 bis 8, **dadurch gekennzeichnet, dass** ein Testfeld dunkel ein Testfeld hell ist und dass die Testfelder im Wechsel nacheinander abgefragt werden.

10. Verfahren nach einem der Ansprüche 1 bis 9, **dadurch gekennzeichnet, dass** der Teilbereich (5, 6) und der Umgebungsbereich (3, 4) über ihre jeweilige Fläche homogene Bildparameter aufweisen.

11. Verfahren nach einem der Ansprüche 1 bis 10, **dadurch gekennzeichnet, dass** als Bildparameter der Kontrast und/oder die Auflösung und/oder das Rauschen verwendet wird.

12. Verfahren nach Anspruch 11, **dadurch gekennzeichnet, dass** der Bildparameter eines Schwarz-weiß-Bildes verwendet wird.

13. Verfahren nach einem der Ansprüche der 1 bis 12, **dadurch gekennzeichnet, dass** in den Bereichen, in denen bestimmte Kontrastunterschiede nicht erkannt werden können, keine oder entsprechend weniger Kontrastwerte zur Darstellung herangezogen werden.

14. Verfahren zum Betrieb von medizinischen Geräten und zur Beeinflussung von deren Funktionsabläufen, bei dem ein Parameter ermittelt wird und die Funktionsabläufe in Abhängigkeit des Parameters gesteuert werden, **dadurch gekennzeichnet, dass**
- der Parameter bestimmt wird aus der Ermittlung des Verhaltens des Wiedergabegeräts bezüglich eines Bildparameters unter Berücksichtigung der vorgegebenen Randbedingungen.

15. Verfahren nach Anspruch 14, **dadurch gekennzeichnet, dass** die Umgebungsbeleuchtung zum Zeitpunkt der Ermittlung des Verhaltens des Wiedergabegeräts bezüglich eines Bildparameters mit der Umgebungsbeleuchtung zum Zeitpunkt der eigentlichen Nutzung des medizinischen Geräts verglichen wird und dass bei über einen vorgegebenen Toleranzbereich hinausgehenden Abweichungen die Funktionsabläufe in Abhängigkeit des Parameters gesteuert werden.

16. Verfahren zur Wiedergabe von Bilddaten auf Bildwiedergabegeräten in der medizinischen Diagnostik, **gekennzeichnet durch** die Verwendung von Verfahrensschritten gemäß einem der vorhergehenden Ansprüche.

17. Verfahren nach Anspruch 16, **dadurch gekennzeichnet, dass** die Umgebungsbeleuchtung zum Zeitpunkt der Ermittlung des Verhaltens des Wiedergabegeräts bezüglich eines Bildparameters mit der Umgebungsbeleuchtung zum Zeitpunkt der eigentlichen Nutzung verglichen wird und dass nur bei innerhalb eines vorgegebenen Toleranzbereichs liegenden Abweichungen eine Wiedergabe der Bilddaten auf dem Bildwiedergabegerät erfolgt.

18. Computerprogramm zur Durchführung des Verfahrens nach einem der Ansprüche 1 bis 17.
